# EUROPÄISCHE PATENTSCHRIFT

(11) **EP 2 899 019 B1**
(45) Veröffentlichungstag und Bekanntmachung des Hinweises auf die Patenterteilung: **25.04.2018**
(21) Anmeldenummer: 15000172.5
(22) Anmeldetag: 22.01.2015
(51) Int. Cl.: B32B 9/00, B32B 15/20, B32B 27/08, B32B 27/18, B32B 3/06, B32B 3/08

(54) **THERMISCHES VERBINDUNGSELEMENT UND VERFAHREN ZU DESSEN HERSTELLUNG**
THERMAL CONNECTION ELEMENT AND METHOD FOR PRODUCING SAME
ÉLÉMENT DE RACCORDEMENT THERMIQUE ET SON PROCÉDÉ DE FABRICATION

(30) Priorität: 28.01.2014 DE 102014000908
(43) Veröffentlichungstag der Anmeldung: 29.07.2015
(73) Patentinhaber: Airbus Defence and Space GmbH, 82024 Taufkirchen (DE)
(72) Erfinder: Sauer, Arne, D-88677 Markdorf (DE); Preller, Fabian, D-38102 Braunschweig (DE)
(74) Vertreter: Schicker, Silvia

(56) Entgegenhaltungen:
- JP-A- 2001 110 952
- US-A- 4 849 858
- US-A- 5 769 158
- US-A- 6 060 166

## Beschreibung

Die Erfindung betrifft ein thermisches Verbindungselement, insbesondere für ein Raumfahrtinstrument, einen Satelliten, ein Verkehrsmittel oder ein Maschinenbauelement, sowie ein Verfahren zu dessen Herstellung.

Thermische Verbindungselemente dienen der thermischen Kopplung zweier Komponenten zur Wärmeübertragung. Häufig sind die Verbindungselemente flexibel gestaltet, um eine Relativbewegung der miteinander durch das Verbindungselement verbundenen Komponenten zu erlauben.

Der Wärmetransport über Feststoffe ist insbesondere bei Raumfahrtanwendungen, wie zum Beispiel einem Raumfahrtinstrument oder einem Satelliten von Bedeutung, da wegen des fehlenden Mediums Luft der Wärmetransport hauptsächlich über die Feststoffe, Strahlung oder Mehrphasensysteme erfolgen kann. Auch im Umfeld von Verkehrsmitteln, wie zum Beispiel Fahrzeugen, oder im Maschinenbau finden sich solche Anforderungen.

Flexible, thermische Verbindungselemente werden in der Regel aus Metallen, wie zum Beispiel Kupfer oder Aluminium, realisiert. Dazu können beispielsweise mehrlagige Streifen aus Metallfolien hergestellt und miteinander verbunden werden, um eine Biegsamkeit um eine Achse bereitstellen zu können. Gleichzeitig wird eine ausreichend große Querschnittsfläche bereitgestellt, um den Wärmetransport durch ein solches Verbindungselement zu gewährleisten. Der Vorteil solcher Verbindungen liegt in der einfachen Verarbeitbarkeit von Metallen. Der Nachteil besteht in einem verhältnismäßig hohen spezifischen Gewicht im Verhältnis zur Leitfähigkeit. Während Kupfer im Vergleich zu Aluminium eine höhere Wärmeleitfähigkeit aufweist, ist gleichzeitig die Dichte größer. Ein sich hieraus ergebendes, höheres Gewicht ist insbesondere bei Raumfahrtanwendungen von Nachteil.

Es sind ferner thermisch hoch leitende Kohlenstofffasern bekannt, deren Leitwerte in Faserrichtung bezüglich ihrer Wärmeleitfähigkeit drei- bis viermal so hoch wie von Aluminium sind. Solche Fasern können mehr Wärme bei deutlich weniger Gewicht transportieren. Allerdings ist die Herstellung eines thermischen, flexiblen Verbindungselements aufgrund der Sprödigkeit der einzelnen Kohlenstofffasern schwierig. Beispielsweise führt eine starke Klemmung der spröden Kohlenstofffasern, welche für eine gute Wärmeübertragung zwischen dem Verbindungselement und den mit dem Verbindungselement gekoppelten Komponenten erforderlich ist, zu einer starken Schädigung zumindest einzelner Kohlenstofffasern, so dass diese nicht mehr zu einer Wärmeleitung beitragen können. Da von einer Schädigung von Kohlenstofffasern zudem Verunreinigungen ausgehen können, welche vor allem bei Raumfahrtanwendungen problematisch sind, wurden aus Kohlenstofffasern bestehende Verbindungselemente bislang nicht zur Produktreife gebracht.

JP 2001 110952 offenbart einen Wärmestrahler mit einer Wärmeübertragungsvorrichtung, einem an jedem Ende der Wärmeübertragungsvorrichtung vorgesehenen Wärmeabsorptionsabschnitt und einen Wärmeabstrahlabschnitt. Die Wärmeübertragungsvorrichtung umfasst Faserbündel, die Kohlefaserbündel sein können. Ein isolierender Träger hält die Faserbündel zusammen. Der Träger für die Faserbündel kann aus Polyester gebildet werden und erstreckt sich entlang der äußeren Faserbündel. An einem Endabschnitt des Wärmeabsorptionsabschnitts ist eine Metallschicht angeformt. Die Metallschicht wird an Außenflächen des Endabschnitts des Wärmeabsorptionsabschnitts angeformt. Die Metallschicht schließt sich an den Träger an. Mit anderen Worten, die Metallschicht umgibt die Außenflächen der Faserbündel und stellt eine Verbindung mit einer Einführnut der Wärmeübertragungsvorrichtung her.

US 4,848,858 offenbart ein thermisches Element mit einem Wärmestrahlungseingangsabschnitt, in dem Graphitfasern angeordnet sind. Die Graphitfasern erstrecken sich parallel zu den Außenflächen des thermischen Elements. Ein Epoxid-Element ist an einem geneigten Abgabeabschnitt des thermischen Elements vorgesehen und weist eine Fläche auf, die sich parallel zu einer thermischen Kontaktfläche des thermischen Elements erstreckt.

US 5,769,158 und US 6,060,166 offenbaren ein thermisches Verbindungselement mit einer Anzahl von übereinander gestapelten CFK-Lagen. Es ist Aufgabe der vorliegenden Erfindung, ein thermisches Verbindungselement anzugeben, dessen gewichtsspezifische Wärmeleitfähigkeit signifikant höher ist als bei einem Bauteil aus konventionellen Werkstoffen. Ferner soll ein Verfahren zur Herstellung eines solchen thermischen Verbindungselements angegeben werden.

Diese Aufgaben werden gelöst durch ein thermisches Verbindungselement gemäß den Merkmalen des Patentanspruches 1 sowie ein Verfahren zur Herstellung gemäß den Merkmalen des Patentanspruches 11. Vorteilhafte Ausgestaltungen ergeben sich aus den abhängigen Patentansprüchen.

Es wird ein thermisches Verbindungselement vorgeschlagen, das insbesondere für die Verwendung in einem Raumfahrtinstrument, einem Satelliten, einem Verkehrsmittel (wie zum Beispiel einem Kraftfahrzeug) oder einem Maschinenbauelement vorgesehen ist. Das Verbindungselement umfasst eine Anzahl an übereinander gestapelten kohlenstofffaserverstärkten Kunststofflagen (nachfolgend: CFK-Lagen), wobei jede der CFK-Lagen aus einer Mehrzahl an wärmeleitenden

Kohlenstofffasern besteht, die in einer Matrix eingebettet sind. Die CFK-Lagen sind an zumindest zwei Abschnitten, insbesondere gegenüberliegenden Endabschnitten, von dem Material der Matrix befreit, so dass die Kohlenstofffasern einer jeweiligen CFK-Lage in den zumindest zwei Abschnitten freigelegt sind. Die freigelegten Abschnitte der Kohlenstofffasern sind mit einer zugeordneten Metallisierung versehen, über die das Verbindungselement mit einem thermisch leitenden Anschlusselement verbunden ist.

Als Material der Matrix kann ein Harz verwendet werden, das eine möglichst geringe Steifigkeit und eine hohe Wärmeleitfähigkeit aufweist. Es kommen beispielsweise dotierte Harzsysteme mit Kohlenstoffmodifikationen wie Carbon-Nano-Tubes, Graphit oder Graphen in Betracht. Die CFK-Lagen sind beispielsweise platten- oder folienförmig ausgebildet.

Ein solches thermisches Verbindungselement weist eine hohe Wärmeleitfähigkeit bei gleichzeitig geringer Dichte und mechanischer Flexibilität des Bauteils auf. Durch das Einbetten der Kohlenstofffasern in ein Matrixmaterial können bei einem Bruch von einzelnen der Kohlenstofffasern keine Verunreinigungen entstehen. Durch die Metallisierung und die thermisch leitenden Anschlusselemente, welche insbesondere aus einem herkömmlichen Metall bestehen, kann ein weitestgehend verlustfreier Eintrag bzw. Austrag von Wärme in das bzw. aus dem thermische(n) Verbindungselement und genauer in die bzw. an den Kohlenstofffasern der CFK-Lagen erfolgen. Durch die Metallisierung der freigelegten Abschnitte der Kohlenstofffasern ist eine gut wärmeleitende Verbindung mit einem jeweiligen thermisch leitenden Anschlusselement möglich.

Gemäß einer zweckmäßigen Ausgestaltung sind die freigelegten Abschnitte der Kohlenstofffasern Endabschnitte der Kohlenstofffasern. Dabei erstrecken sich die Kohlenstofffasern unidirektional in einer Richtung von einem ersten der Endabschnitte zu einem zweiten der Endabschnitte. Die platten- bzw. folienartigen Elemente haben idealerweise eine Dicke von unter 0,15 mm. Hierdurch ergibt sich neben der guten thermischen Leitfähigkeit des Verbindungselements auch eine hohe Biegsamkeit des Verbindungselements um die Achse quer zur Faserrich-tung.

Gemäß einer weiteren Ausgestaltung weist die Dicke der freigelegten Abschnitte einer jeweiligen CFK-Lage zwischen 50 % und 70 %, insbesondere etwa 60 % der Dicke eines nicht freigelegten Abschnitts der jeweiligen CFK-Lage auf.

Gemäß einer weiteren Ausgestaltung beträgt der Faservolumengehalt eines nicht freigelegten Abschnitts einer jeweiligen CFK-Lage zwischen 50 % und 70 %, insbesondere etwa 60 %. Dies bedeutet mit anderen Worten, dass das Verbindungselement im Bereich der freigelegten Abschnitte vollständig oder nahezu vollständig von dem Material der Matrix befreit ist.

Die Metallisierung an den freigelegten Abschnitten weist gemäß einer weiteren zweckmäßigen Ausgestaltung eine Dicke von etwa 5 µm bis 20 µm auf. Durch das Vorsehen der Metallisierung an den freigelegten Abschnitten kann ein guter Wärmeanschluss zu den jeweiligen Anschlusselementen erzielt werden.

Die Metallisierung ist gemäß einer zweckmäßigen Ausgestaltung aus Kupfer ge-bildet. Grundsätzlich sind jedoch auch andere, metallische Materialien, wie zum Beispiel Gold, Silber, und Legierungen davon, vorstellbar.

Um einen besonders guten thermischen Übergang zwischen der Metallisierung und den Kohlenstofffasern der CFK-Lage(n) zu erzielen, umgibt die Metallisierung die einzelnen Kohlenstofffasern an den freigelegten Abschnitten. Ein weiter verbesserter Wärmeübergang ergibt sich dadurch, dass die mit der Metallisierung umgebenen Kohlenstofffasern zumindest einer CFK-Lage stoffschlüssig miteinander verbunden sind. Insbesondere kann das gesamte Lagenpaket stoffschlüssig im Bereich der Endabschnitte thermisch leitend miteinander verbunden sein.

Für eine weiter optimierte Wärmeeinleitung in die Kohlenstofffasern ist es zweckmäßig, wenn die Metallisierung an Stirnflächen der von der Matrix freigelegten Kohlenstofffasern grenzt.

Es ist bevorzugt, wenn die Kohlenstofffasern in Faserrichtung eine hohe Wärmeleitfähigkeit aufweisen. Beispielsweise kann ein unter dem Namen K13D2U bekanntes Kohlenstofffasermaterial der Firma Mitsubishi eingesetzt werden, welches mit ca. 800 W/mK eine der höchsten Wärmeleitfähigkeiten einer Kohlenstofffaser auf dem Weltmarkt aufweist.

Es ist weiterhin zweckmäßig, wenn die Anschlusselemente jeweils stoffschlüssig mit den zugeordneten metallisierten Abschnitten verbunden sind. Bei dieser Ausgestaltung ergibt sich ein besonders guter Wärmeübergang von den Anschlusselementen auf die metallisierten, freigelegten Kohlenstofffasern. Im Fall einer rein kraftschlüssigen Verbindung, insbesondere durch Klemmung, können die Anschlusselemente zerstörungsfrei von dem mit der Metallisierung versehenen Lagenpaket gelöst werden.

Es wird weiter ein Verfahren zur Herstellung eines thermischen Verbindungselements der oben beschriebenen Art vorgeschlagen. Dieses umfasst die folgenden Schritte:
a) Bereitstellen einer Anzahl an CFK-Lagen, wobei jede der CFK-Lagen aus einer Mehrzahl an wärmeleitenden Kohlenstofffasern besteht, die in einer Matrix eingebettet sind;
b) Entfernen des Materials der Matrix an zumindest zwei Abschnitten, insbesondere gegenüberliegenden Endabschnitten, jeder der Anzahl von CFK-Lagen, so dass die Kohlenstofffasern einer jeweiligen CFK-Lage in diesen Abschnitten freigelegt sind;
c) Metallisieren der freigelegten Abschnitte;
d) Stapeln der mit einer Metallisierung versehenen Abschnitte der Anzahl an CFK-Lagen zu einem Lagenpaket und Herstellen einer stoffschlüssigen Verbindung der metallisierten Abschnitte zumindest mancher der Anzahl an CFK-Lagen;
e) Verbinden der metallisierten Abschnitte mit einem zugeordneten thermisch leitenden Anschlusselement.

Insbesondere die Schritte b), c) und d) müssen nicht in der angegebenen Reihenfolge (b-c-d) durchgeführt werden, sondern können auch in einer davon abweichenden Reihenfolge ausgeführt werden. Beispielsweise können die Schritte c) und d) in ihrer Reihenfolge vertauscht werden. Ebenso kann Schritt d), gemäß dem das Stapeln der Anzahl an CFK-Lagen zu einem Lagenpaket erfolgt, bereits vor Schritt b durchgeführt werden.

Das Entfernen des Materials der Matrix gemäß Schritt b) kann wahlweise durch chemisches Lösen oder durch thermisches Lösen erfolgen. Beim chemischen Lösen kann beispielsweise eine Salzsäurelösung verwendet werden, um die vorgegebenen Abschnitte, insbesondere Endabschnitte, einer jeweiligen CFK-Lage von dem Matrix-Material zu befreien. Ein thermisches Lösen kann beispielsweise mittels Laser erfolgen.

Das Metallisieren der freigelegten Abschnitte gemäß Schritt c) erfolgt gemäß einer zweckmäßigen Ausgestaltung durch Galvanisieren, insbesondere mit Kupfer.

Es ist zweckmäßig, wenn die stoffschlüssige Verbindung gemäß Schritt d) durch Löten hergestellt wird. Hierdurch können die metallisierten Abschnitte der Kohlenstofffasern einer jeweiligen Lage, aber auch von unterschiedlichen CFK-Lagen, zuverlässig miteinander verbunden werden. Darüber hinaus kann durch die Steuerung der Menge des auf- bzw. eingebrachten Lots ein sicherer Wärmeübergang zu dem thermisch leitenden Anschlusselement aufgrund der stark vergrößerten Kontaktfläche bzw. des thermisch aktiven Volumens sichergestellt werden.

Gemäß einer weiteren Ausgestaltung des Verfahrens wird das, bevorzugt aus Metall bestehende, Anschlusselement mit dem zugeordneten metallisierten Endabschnitt durch Stoffschluss, insbesondere durch Löten, verbunden; eventuell kombiniert mit einer Verbindung durch Kraftschluss. Dadurch, dass der Kraftschluss zu einem, duktile Eigenschaften aufweisenden Lot erfolgt, kann die Gefahr der Beschädigung der Kohlenstofffasern aufgrund der durch das Anschlusselement eingeleiteten Kraft stark reduziert oder sogar vollständig eliminiert werden.

Die Erzeugung der Anzahl an CFK-Lagen mit einer unidirektionalen Faserausrichtung der Kohlenstofffasern und die Tränkung mit einem Material der Matrix erfolgt gemäß einer weiteren zweckmäßigen Ausgestaltung bevorzugt im Faserwickelverfahren mit einem Wickelwerkzeug.

Die Erfindung wird nachfolgend näher anhand eines Ausführungsbeispiels in der Zeichnung erläutert.

Die Figuren 1 bis 5 zeigen aufeinanderfolgende Herstellungsschritte zum Herstellen eines erfindungsgemäßen flexiblen, thermischen Verbindungselements.
Fig.6 zeigt eine Draufsicht auf eine CFK-Folie oder -platte, welche zur Herstellung des erfindungsgemäßen Verbindungselements verwendet wird.

Bei der thermalen Auslegung von Raumfahrtkomponenten, wie zum Beispiel Raumfahrtinstrumenten oder Satelliten, ist es erforderlich, thermische Verbindungen vorzusehen, die den Wärmefluss zwischen verschiedenen Punkten der Raumfahrtkomponente ermöglichen. Auf diese Weise können Überhitzungen oder Unterkühlungen von Struktur und Einzelkomponenten vermieden werden. Gegenwärtig werden solche thermische Verbindungen mit festen oder flexiblen Bauteilelementen gelöst, die aus konventionellen hoch wärmeleitfähigen Werkstoffen, wie Aluminium oder Kupfer, bestehen. Kupfer weist eine mehr als doppelt so hohe Wärmeleitfähigkeit als Aluminium auf, allerdings beträgt die Dichte von Kupfer mehr als das Dreifache der Dichte von Aluminium. Es ergibt sich insgesamt ein etwas besseres Verhältnis von Dichte zu Wärmeleitfähigkeit für Aluminium (ρ/α_{Alu} = 17,3 kgK/Wm² und ρ/α_{Kupfer} = 22,2 kgK/Wm²).

Flexible thermische Verbindungselemente werden zum Beispiel als mehrlagige Streifen aus Metallfolien hergestellt. Diese sind um eine Achse biegsam und verfügen über eine ausreichend große Querschnittsfläche, um den Wärmetransport durch das Verbindungselement zu gewährleisten. Der Vorteil solcher Verbindungselemente liegt in der einfachen Verarbeitbarkeit. Ein Nachteil ist das relativ hohe spezifische Gewicht im Verhältnis zur Leitfähigkeit.

Anhand der nachfolgenden Figuren wird die Herstellung eines erfindungsgemäßen flexiblen, thermischen Verbindungselements 1 mit im Vergleich zu herkömmlichen Verbindungselementen höherer gewichtsspezifischer Wärmeleitfähigkeit beschrieben. Gleichzeitig ist das Verbindungselement 1 biegeweich, so dass es sich in Raumfahrtanwendungen, wie zum Beispiel bei Raumfahrtinstrumenten oder Satelliten, gut zum Wärmetransport einsetzen lässt. Damit lässt sich der Wärmeaustausch zwischen zwei Komponenten, welche über ein oder mehrere Verbindungselemente 1 miteinander verbunden sind, verhältnismäßig verlustarm realisieren.

Die Struktur des Verbindungselements 1 basiert auf der Überlegung, dass die Wärmeleitfähigkeit eines kohlefaserverstärkten Verbundwerkstoffs um ein mehrfaches höher als die von Kupfer oder Aluminium ist. Gleichzeitig ist jedoch das Gewicht von CFK gegenüber Metallen wesentlich geringer.

Das erfindungsgemäß vorgeschlagene Verbindungselement 1 nutzt thermisch hoch leitende Kohlenstofffasern, deren Leitwerte in Faserrichtung drei- bis viermal so hoch wie das von Aluminium ist. Hierdurch lassen sich Verbindungselemente mit geringer Masse, hoher Formstabilität, guter thermischer Leitfähigkeit sowie vielseitigen Verwendungsmöglichkeiten bereitstellen. Ein solches Verbindungselement kann nicht nur in Raumfahrtkomponenten, sondern allgemein bei all solchen Instrumenten zum Einsatz kommen, wo eine hohe Formstabilität im Vordergrund steht, wie zum Beispiel bei Teleskopstrukturen, optischen Banken, Wellenleitern, Antennenreflektoren und -strukturen usw.

Die Herstellung des Verbindungselements 1 ist wie folgt. Zunächst wird eine Anzahl an CFK-Lagen 10 bereitgestellt. Jede der CFK-Lagen 10 besteht aus einer Mehrzahl an wärmeleitenden Kohlenstofffasern 15, die in einem Matrixmaterial 16 eingebettet sind. Geeignete Kohlenstofffasern sind beispielsweise die unter dem Namen K13D2U bekannten Kohlenstofffasern der Firma Mitsubishi. Diese weisen in Faserrichtung eine Wärmeleitfähigkeit von ca. 800 W/mK auf. Alternativ könnten die unter dem Namen K1100 bekannten Fasern verwendet werden, welche zwar eine deutlich höhere Leitfähigkeit von 1100 W/mK aufweist, allerdings nicht mehr produziert wird und somit auf dem Weltmarkt nicht mehr verfügbar ist. Als Material der Matrix kann ein Harz verwendet werden, das eine geringe Steifigkeit und eine hohe Wärmeleitfähigkeit aufweist. Es kommen beispielsweise dotierte Harzsysteme mit Kohlenstoffmodifikationen wie Carbon-Nano-Tubes, Graphit oder Graphen in Betracht.

In jeder der CFK-Lagen 10 sind die Kohlenstofffasern 15 unidirektional, d.h. in einer Richtung ausgerichtet. Die Erzeugung einer CFK-Lage erfolgt durch Tränkung mit dem Material der Matrix im Faserwickelverfahren mit einem Plattenwerkzeug. Hierzu kann im Rahmen des Herstellungsprozesses ein Kohlenstofffaser-Roving auf einen Kern gewickelt werden. Die Tränkung des Rovings wird mittels Harzauftrag am Werkzeug durchgeführt. Nach der Wicklung werden die Rovings mit einem Werkzeugdeckel an einen Werkzeugkern gepresst. Über Abstandsstücke kann eine definierte Schichtdicke bzw. ein definierter Faservolumengehalt eingestellt werden.

Eine jeweilige CFK-Lage hat beispielsweise eine Abmessung von 100 x 150 mm bei einer Dicke von idealerweise unter 0,15 mm.

Durch eine Minimierung der Faseranzahl in Dickenrichtung einer jeweiligen Platte kann eine höhere Biegsamkeit um die Achse quer zur Faserrichtung erzielt werden. Dies kann durch eine Aufspreizung des Faser-Rovings im Rahmen der Verarbeitung erreicht werden. Auch eine Änderung des Faserwinkels zur Wärmeflussrichtung hat eine Verringerung der Biegesteifigkeit um die Querachse zur Wärmeflussrichtung zur Folge. Eine Kombination dieser Ansätze ist möglich.

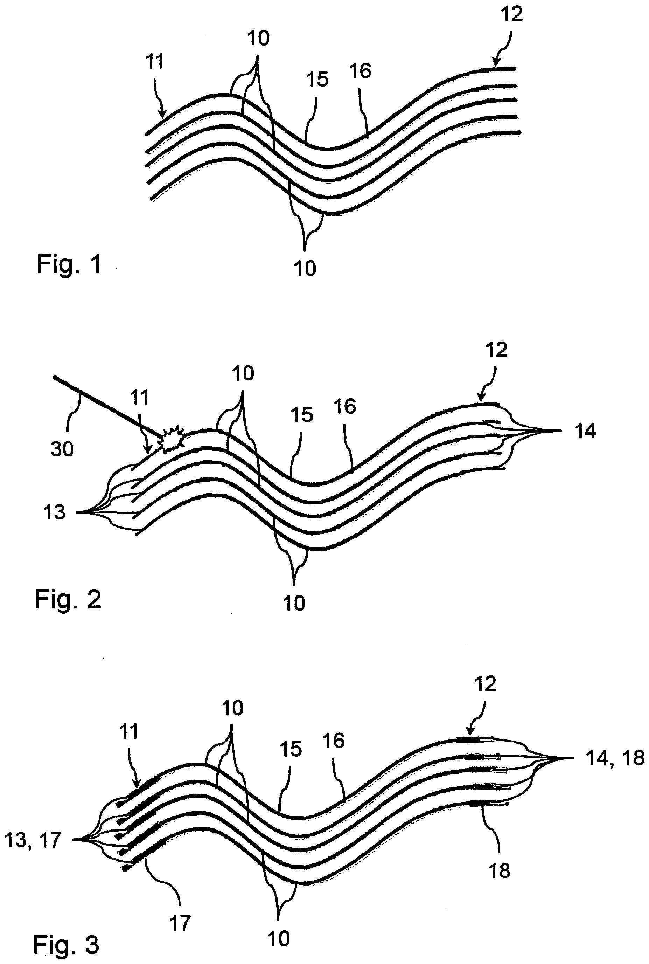

Wie aus Fig. 1 ersichtlich ist, werden im Ausführungsbeispiel insgesamt fünf CFK-Lagen 10 übereinander angeordnet. Die Kohlenstofffasern 15 einer jeweiligen CFK-Lage 10 erstrecken sich in Fig. 1 sowie in allen anderen Figuren von einem ersten Endabschnitt 11 zu einem zweiten Endabschnitt 12. Lediglich zu Illustrationszwecken ist die quer zur Faserrichtung vorhandene Biegsamkeit des Lagenpakets bzw. -Stapels durch den wellenförmigen Verlauf in der Ebene der Zeichnung visualisiert.

In einem nächsten Verarbeitungsschritt, der in Fig. 2 dargestellt ist, werden die jeweiligen Endabschnitte 11, 12 sämtlicher CFK-Lagen 10 vom Material der Matrix 16 befreit, so dass die Kohlenstofffasern 15 einer jeweiligen CFK-Lage in diesen Abschnitten 13, 14 freigelegt sind. Das Freilegen der Faserenden von der Matrix kann mittels chemischen Lösens (zum Beispiel mittels Salzsäurelösung) oder thermischen Lösens mittels Laserstrahl erfolgen. Nach dem Entfernen des Matrix-Materials verbleiben etwa 60 % der Schichtdicke erhalten, bei einem Faservolumengehalt der unbehandelten CFK-Lage 10 von ebenfalls 60 %. Anhand von Versuchen konnte festgestellt werden, dass sowohl durch chemisches als auch thermisches Lösen des Matrix-Materials keine Schädigungen an den Kohlenstofffasern entstehen. In Fig. 3 ist das Lösen des Matrix-Materials 16 schematisch durch einen Laserstrahl 30 der obersten CFK-Lage 10 angedeutet.

Im Gegensatz zur vorangehenden Beschreibung könnte das Freilegen der Faserenden der Kohlenstofffasern einer jeweiligen CFK-Lage auch vor dem Stapeln der Mehrzahl an CFK-Lagen 10 erfolgen. Mit anderen Worten könnten die Verarbeitungsschritte, die in den Figuren 1 und 2 dargestellt sind, auch in umgekehrter Reihenfolge erfolgen.

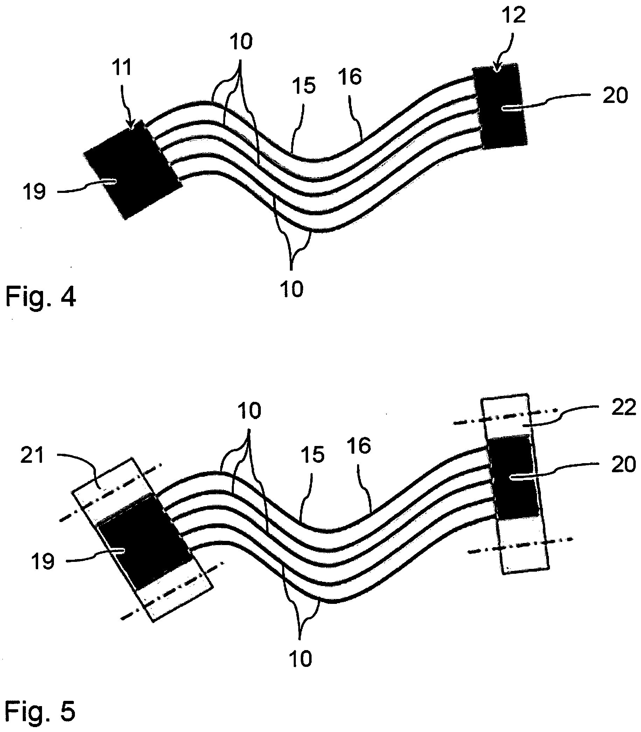

In einem nächsten Schritt (Fig. 3) erfolgt ein Metallisieren der freigelegten Endabschnitte 13, 14. Hierzu wird zunächst eine galvanische Verkupferung der freigelegten Endabschnitten 13, 14 der Kohlenstofffasern 15 durchgeführt. Es ist ausreichend, wenn die hierbei erzielte Schichtdicke bis etwa 20 µm beträgt. Insbesondere werden bei der Galvanisierung auch die Stirnflächen der Kohlenstofffasern 15 mit der Metallschicht bedeckt. Anschließend erfolgt ein Verlöten der vormetallisierten Faserenden. Dabei können in einem ersten Zwischenschritt zunächst die metallisierten Kohlenstofffaserenden einer jeweiligen CFK-Lage 10 thermisch miteinander verbunden werden. Es ist zweckmäßig, wenn die Verlötung der metallisierten Enden der Kohlenstofffasern über mehrere CFK-Lagen 10 hinweg erfolgt. Hieraus ergibt sich die in Fig. 4 dargestellte thermische Verbindung 19 bzw. 20 an den gegenüberliegenden Endabschnitten 11, 12 des Lagenpakets.

Schließlich wird in einem letzten Verarbeitungsschritt ein jeweiliges metallisches, da gut wärmeleitendes Anschlusselement 21, 22 mit den wie oben beschriebenen erzeugten, thermischen Verbindungen 19, 20 durch Stoffschluss ggf. kombiniert mit Kraftschluss, miteinander verbunden. Die Anschlusselemente 21, 22 können mit der zugeordneten thermischen Verbindung 19, 20 beispielsweise durch eine Lötung, ggf. kombiniert mit einer Klemmung, verbunden werden. Über die Anschlusselemente 21, 22 ist dann eine Verbindung zu den thermisch und/oder mechanisch miteinander zu koppelnden Komponenten, zum Beispiel eines Raumfahrtinstruments, vorzunehmen.

Ein derart hergestelltes Verbindungselement 1 weist eine hohe Leistungsfähigkeit zu geringe Dichte bei mechanischer Flexibilität des Bauteils auf. Dies wird durch die Verwendung von Kohlenstofffasern mit hoher Wärmeübertragungsfähigkeit realisiert. Ein Verunreinigungsproblem durch Faserbruch im Rahmen der Herstellung ist durch die Einbettung der Kohlenstofffasern in ein Matrix-Material minimiert bzw. ausgeschlossen. Dadurch, dass die Stirnflächen der Kohlenstofffasern mit der Metallisierung in Kontakt stehen, wird ein verlustfreier Eintrag bzw. Austrag von Wärme in bzw. aus den Faserenden ermöglicht.

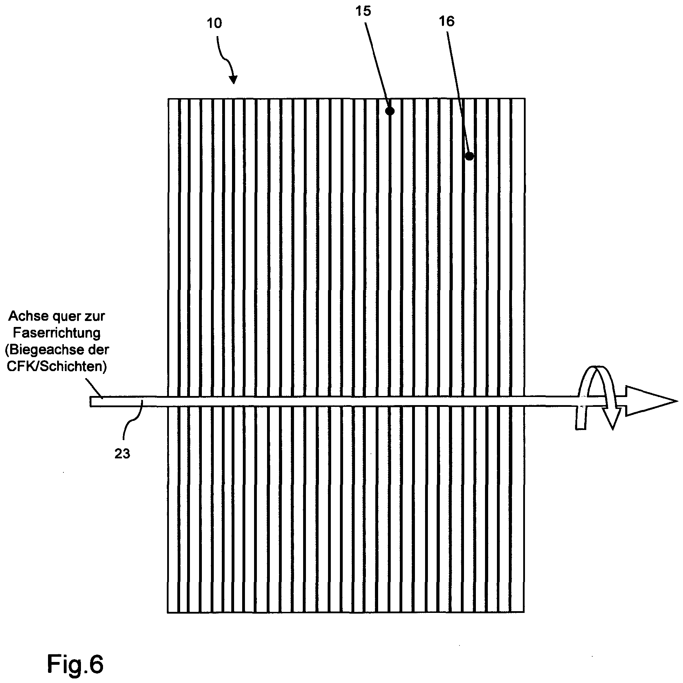

Fig.6 zeigt eine Draufsicht auf eine der CFK-Lagen 10 in Gestalt einer Folie oder Platte, aus der der unidirektionale Verlauf der Kohlenstofffasern 15 in der Matrix 16 hervorgeht. Zusätzlich ist die Biegeachse (Bezugszeichen 23) dargestellt.

### BEZUGSZEICHENLISTE

- 1: Verbindungselement
- 10: CFK-Lage
- 11: erster (End)abschnitt der CFK-Lage 10
- 12: zweiter (End)abschnitt der CFK-Lage 10
- 13: erster, freigelegter Endabschnitt der CFK-Lage 10
- 14: zweiter, freigelegter Endabschnitt der CFK-Lage 10
- 15: Kohlenstofffasern
- 16: Matrix
- 17: Metallisierung in dem von der Matrix freigelegten ersten Endabschnitt 13
- 18: Metallisierung in dem von der Matrix freigelegten zweiten Endabschnitt 14
- 19: thermische Verbindung
- 20: thermische Verbindung
- 21: erstes Anschlusselement
- 22: zweites Anschlusselement
- 23: Biegeachse
- 30: Laserstrahl

## Patentansprüche

1. Thermisches Verbindungselement (1), insbesondere für ein Raumfahrtinstrument, einen Satelliten, ein Verkehrsmittel oder ein Maschinenbauelement, bei dem
- eine Anzahl an übereinander gestapelten CFK-Lagen (10) vorgesehen ist, wobei jede der CFK-Lagen aus einer Mehrzahl an wärmeleitenden Kohlenstofffasern (15) besteht, die in einer Matrix (16) eingebettet sind;
- die CFK-Lagen (10) an zumindest zwei Abschnitten (11, 12), insbesondere gegenüberliegenden Endabschnitten, von dem Material der Matrix (16) befreit sind, so dass die Kohlenstofffasern (15) einer jeweiligen CFK-Lage (10) in den zumindest zwei Abschnitten (11, 12) freigelegt sind;
- die freigelegten Abschnitte (13, 14) der Kohlenstofffasern (15) mit einer zugeordneten Metallisierung (17, 18) versehen sind, über die das Verbindungselement (1) mit einem thermisch leitenden Anschlusselement (21, 22) verbunden ist, wobei die Metallisierung (17, 18) die einzelnen Kohlenstofffasern (15) an den von der Matrix (16) freigelegten Abschnitten (13, 14) umgibt, wobei die metallisierten Abschnitte der Kohlenstofffassern (15) zumindest einer CFK-Lage (10) stoffschlüssig miteinander verbunden sind.

2. Verbindungselement nach Anspruch 1, bei dem die freigelegten Abschnitte (13, 14) der Kohlenstofffasern (15) Endabschnitte der Kohlenstofffasern (15) sind, wobei sich die Kohlenstofffasern (15) unidirektional in einer Richtung von einem ersten der Endabschnitte (13) zu einem zweiten der Endabschnitte (14) erstrecken.

3. Verbindungselement nach Anspruch 1 oder 2, bei dem die CFK-Lagen (10)eine Dicke von unter 0,15 mm aufweisen.

4. Verbindungselement nach einem der vorhergehenden Ansprüche, bei dem die Dicke der freigelegten Abschnitte (13, 14) einer jeweiligen CFK-Lage (10) zwischen 50 % und 70 %, insbesondere etwa 60 %, der Dicke eines nicht freigelegten Abschnitts der jeweiligen CFK-Lage (10) beträgt.

5. Verbindungselement nach einem der vorhergehenden Ansprüche, bei dem der Faservolumengehalt eines nicht freigelegten Abschnitts einer jeweiligen CFK-Lage (10) zwischen 50 % und 70 %, insbesondere etwa 60 %, beträgt.

6. Verbindungselement nach einem der vorhergehenden Ansprüche, bei dem die Metallisierung an den freigelegten Abschnitten (13, 14) eine Dicke von etwa 5 µm bis 20 µm aufweist.

7. Verbindungselement nach einem der vorhergehenden Ansprüche, bei dem die Metallisierung (17, 18) aus Kupfer gebildet ist.

8. Verbindungselement nach einem der vorhergehenden Ansprüche, bei dem die Metallisierung (17, 18) an Stirnflächen der von der Matrix (16) freigelegten Kohlenstofffasern (15) grenzt.

9. Verbindungselement nach einem der vorhergehenden Ansprüche, bei dem die Kohlenstofffasern (15) in Faserrichtung eine Wärmeleitfähigkeit von mindestens etwa 800 W/mK, aufweisen.

10. Verbindungselement nach einem der vorhergehenden Ansprüche, bei dem die Anschlusselemente (21, 22) jeweils stoffschlüssig, insbesondere durch Lötung und optional kombiniert mit einer kraftschlüssigen Verbindung, insbesondere durch Klemmung, mit den zugeordneten metallisierten Abschnitten (13, 14) verbunden sind.

11. Verfahren zur Herstellung eines thermischen Verbindungselements (1), das gemäß einem der vorhergehenden Ansprüche ausgebildet ist, mit den folgenden Schritten:
a) Bereitstellen einer Anzahl an CFK-Lagen (10), wobei jede der CFK-Lagen aus einer Mehrzahl an wärmeleitenden Kohlenstofffasern (15) besteht, die in einer Matrix (16) eingebettet sind;
b) Entfernen des Materials der Matrix (16) an zumindest zwei Abschnitten (11, 12), insbesondere gegenüberliegenden Endabschnitten, jeder der Anzahl von CFK-Lagen (10), so dass die Kohlenstofffasern (15) einer jeweiligen CFK-Lage (10) in diesen Abschnitten freigelegt sind;
c) Metallisieren der freigelegten Abschnitte (13, 14);
d) Stapeln der mit einer Metallisierung (17, 18) versehenen Abschnitte (13, 14) der Anzahl an CFK-Lagen (10) zu einem Lagenpaket und Herstellen einer stoffschlüssigen Verbindung der metallisierten Abschnitte (13, 14) zumindest mancher der Anzahl an CFK-Lagen (10);
e) Verbinden der metallisierten Abschnitte (13, 14) mit einem zugeordneten thermisch leitenden Anschlusselement (21, 22).

12. Verfahren nach Anspruch 11, bei dem das Entfernen des Materials der Matrix (16) gemäß Schritt b) durch chemisches Lösen oder durch thermisches Lösen erfolgt.

13. Verfahren nach Anspruch 11 oder 12, bei dem das Metallisieren der freigelegten Abschnitte (13, 14) gemäß Schritt c) durch Galvanisieren, insbesondere mit Kupfer, erfolgt.

14. Verfahren nach einem der Ansprüche 11 bis 13, bei dem die stoffschlüssige Verbindung gemäß Schritt d) durch Löten hergestellt wird.

15. Verfahren nach einem der Ansprüche 11 bis 14, bei dem das Anschlusselement (21, 22) mit dem zugeordneten metallisierten Endabschnitt (13, 14) durch Stoffschluss, insbesondere durch Löten, optional in Kombination mit Kraftschluss, insbesondere durch Klemmen, verbunden wird.

16. Verfahren nach einem der Ansprüche 11 bis 15, bei dem die Erzeugung der Anzahl an CFK-Lagen (10) mit einer unidirektionalen Faserausrichtung der Kohlenstofffasern (15) und die Tränkung mit einem Material der Matrix (16) im Faserwickelverfahren mit einem Wickelwerkzeug erfolgt.

## Claims

1. A thermal bridge element (1) in particular for a space flight instrument, a satellite, a transportation means, or a machine component, wherein
a number of CFK layers (10) stacked on top of one another is provided, wherein each of the CFK layers is composed of a plurality of heat-conductive carbon fibers (15) embedded in a matrix (16);
in at least two segments (11, 12), in particular in opposing end segments, the CFK layers (10) are freed of the material of the matrix (16) so that the carbon fibers (15) of a respective CFK layer (10) are exposed in the at least two segments (11, 12);
the exposed segments (13, 14) of the carbon fibers (15) are provided with an associated metallization (17, 18), by way of which the bridge element (1) is connected to a thermally conductive connector element (21, 22), wherein the metallization (17, 18) encompasses the individual carbon fibers (15) in the segments (13, 14) exposed from the matrix (16), wherein the metallized segments of the carbon fibers (15) of at least one CFK layer (10) are connected to one another in a material-fit manner.

2. The thermal bridge element according to claim 1, wherein the exposed segments (13, 14) of the carbon fibers (15) are end segments of the carbon fibers (15), wherein the carbon fibers (15) extend unidirectionally, in a direction from a first of the end segments (13) to a second of the end segments (14).

3. The thermal bridge element according to claim 1 or 2, wherein the CFK layers (10) have a thickness of less than 0.15 mm.

4. The thermal bridge element according to any one of the preceding claims, wherein a thickness of the exposed segments (13, 14) of a respective CFK layer (10) is between 50% and 70%, in particular about 60% of the thickness of a non-exposed segment of the respective CFK layer (10).

5. The thermal bridge element according to anyone of the preceding claims, wherein a fiber volume content of a non-exposed segment of a respective CFK layer (10) is between 50% and 70%, in particular about 60%.

6. The thermal bridge element according to anyone of the preceding claims, wherein the metallization on the exposed segments (13, 14) has a thickness of about 5 µm to 20 µm.

7. The thermal bridge element according to anyone of the preceding claims, wherein the metallization (17, 18) is formed of copper.

8. The thermal bridge element according to anyone of the preceding claims, wherein the metallization (17, 18) borders on end faces of the carbon fibers (15) that are freed of the matrix (16).

9. The thermal bridge element according to anyone of the preceding claims, wherein in fiber direction, the carbon fibers (15) have a heat conductivity of at least about 800 W/mK.

10. The thermal bridge element according to anyone of the preceding claims, wherein the connector elements (21, 22) are each connected to the associated metallized segments (13, 14) in a material-fit manner, in particular by soldering and optionally in combination with a force-fit connection, in particular by clamping.

11. A method for producing a thermal bridge element (1) which is formed according to anyone of the preceding claims, the method comprising the following steps:
a) providing a number of CFK layers (10), wherein each of the CFK layers is composed of a plurality of heat-conductive carbon fibers (15) embedded in a matrix (16);
b) removing the material of the matrix (16) from at least two segments (11, 12), in particular opposing end segments, of each of the number of CFK layers (10) so that the carbon fibers (15) of a respective CFK layer (10) in these segments are exposed;
c) metallizing the exposed segments (13, 14);
d) stacking the segments (13, 14) of the number of CFK layers (10) provided with a metallization (17, 18) into a layer packet, and establishing a material-fit connection of the metallized segments (13, 14) of at least some of the number of CFK layers (10);
e) connecting the metallized segments (13, 14) to an associated thermally conductive connector element (21, 22).

12. The method of claim 11, wherein the removal of the materials of the matrix (16) according to step b) is carried out by chemical dissolution or thermal dissolution.

13. The method of claim 11 or 12, wherein the metallizing of the exposed segments (13, 14) according to step c) is done by galvanizing, in particular with copper.

14. The method of any one of claims 11 to 13, wherein the material-fit connection according to step d) is established by soldering.

15. The method of any one of claims 11 to 14, wherein the connector element (21, 22) is connected to the associated metallized end segment (13, 14) in a material-fit manner, in particular by soldering, optionally in combination with a force-fit connection, in particular by clamping.

16. The method of anyone of claims 11 to 15, wherein the generating of the number of CFK layers (10) is done with a unidirectional fiber orientation of the carbon fibers (15) and impregnation with a material of the matrix (16) using a fiber winding method with a winding tool.

## Revendications

1. Élément de liaison thermique (1), notamment pour un instrument astronautique, un satellite, un moyen de transport ou un élément de construction mécanique, dans lequel
- un certain nombre de couches de CFK (10) superposées est prévu, chacune des couches de CFK étant composée d'une pluralité de fibres de carbone thermo-conductrices (15) qui sont noyées dans une matrice (16) ;
- les couches de CFK (10) sont libérées du matériau de la matrice (16) sur au moins deux parties (11, 12), en particulier sur des parties terminales opposées, de sorte que les fibres de carbone (15) d'une couche de CFK (10) respective sont dégagées dans lesdites au moins deux parties (11, 12) ;
- les parties dégagées (13, 14) des fibres de carbone (15) sont munies d'une métallisation (17, 18) associée par laquelle l'élément de liaison (1) est relié à un élément de raccordement thermoconducteur (21, 22), la métallisation (17, 18) entourant les fibres de carbone individuelles (15) sur les parties (13, 14) dégagées de la matrice (16), les parties métallisées des fibres de carbone (15) d'au moins une couche de CFK (10) étant reliées entre elles par liaison de matière.

2. Élément de liaison selon la revendication 1, dans lequel les parties dégagées (13, 14) des fibres de carbone (15) sont des parties terminales des fibres de carbone (15), les fibres de carbone (15) s'étendant de manière unidirectionnelle dans une direction allant d'une première des parties terminales (13) à une deuxième des parties terminales (14).

3. Élément de liaison selon la revendication 1 ou 2, dans lequel les couches de CFK (10) présentent une épaisseur inférieure à 0,15 mm.

4. Élément de liaison selon l'une des revendications précédentes, dans lequel l'épaisseur des parties dégagées (13, 14) d'une couche de CFK (10) respective est de 50 % à 70 %, en particulier d'environ 60 %, de l'épaisseur d'une partie non dégagée de la couche de CFK (10) respective.

5. Élément de liaison selon l'une des revendications précédentes, dans lequel la teneur de fibres en volume d'une partie non dégagée d'une couche de CFK (10) respective est de 50 % à 70 %, en particulier d'environ 60 %.

6. Élément de liaison selon l'une des revendications précédentes, dans lequel la métallisation sur les parties dégagées (13, 14) présente une épaisseur d'environ 5 µm à 20 µm.

7. Élément de liaison selon l'une des revendications précédentes, dans lequel la métallisation (17, 18) est formée de cuivre.

8. Élément de liaison selon l'une des revendications précédentes, dans lequel la métallisation (17, 18) est adjacente aux faces frontales des fibres de carbone (15) dégagées de la matrice (16).

9. Élément de liaison selon l'une des revendications précédentes, dans lequel les fibres de carbone (15) présentent une conductivité thermique d'au moins environ 800 W/mK dans la direction des fibres.

10. Élément de liaison selon l'une des revendications précédentes, dans lequel chacun des éléments de raccordement (21, 22) est relié aux parties métallisées (13, 14) associées par liaison de matière, en particulier par brasage, facultativement en combinaison avec une liaison à force, en particulier par serrage.

11. Procédé de fabrication d'un élément de liaison thermique (1) qui est réalisé selon l'une des revendications précédentes, comprenant les étapes suivantes :
a) fourniture d'un certain nombre de couches de CFK (10), chacune des couches de CFK étant composée d'une pluralité de fibres de carbone thermocon-ductrices (15) qui sont noyées dans une matrice (16) ;
b) élimination du matériau de la matrice (16) de chacune dudit nombre de couches de CFK (10) sur au moins deux parties (11, 12), en particulier sur des parties terminales opposées, de sorte que les fibres de carbone (15) d'une couche de CFK (10) respective sont dégagées dans ces parties ;
c) métallisation des parties dégagées (13, 14) ;
d) empilement des parties (13, 14) munies d'une métallisation (17, 18) dudit nombre de couches de CFK (10) en un paquet de couches et réalisation d'une liaison par matière des parties métallisées (13, 14) d'au moins certaines dudit nombre de couches de CFK (10) ;
e) liaison des parties métallisées (13, 14) avec un élément de raccordement thermoconducteur (21, 22) associé.

12. Procédé selon la revendication 11, dans lequel l'élimination du matériau de la matrice (16) selon l'étape b) est effectuée par dissolution chimique ou par dissolution thermique.

13. Procédé selon la revendication 11 ou 12, dans lequel la métallisation des parties dégagées (13, 14) selon l'étape c) est effectuée par galvanisation, en particulier au cuivre.

14. Procédé selon l'une des revendications 11 à 13, dans lequel la liaison par matière selon l'étape d) est réalisée par brasage.

15. Procédé selon l'une des revendications 11 à 14, dans lequel l'élément de raccordement (21, 22) est relié à la partie terminale métallisée (13, 14) associée par liaison de matière, en particulier par brasage, facultativement en combinaison avec une liaison à force, en particulier par serrage.

16. Procédé selon l'une des revendications 11 à 15, dans lequel la production du nombre de couches de CFK (10) avec une orientation unidirectionnelle des fibres de carbone (15) et l'imprégnation avec un matériau de la matrice (16) par un procédé d'enroulement filamentaire sont effectuées avec un outil de bobinage.
